# EUROPÄISCHE PATENTSCHRIFT

(11) **EP 1 801 149 B1**
(45) Veröffentlichungstag und Bekanntmachung des Hinweises auf die Patenterteilung: **02.06.2010**
(21) Anmeldenummer: 06025545.2
(22) Anmeldetag: 11.12.2006
(51) Int. Cl.: C08K 5/13, C08K 13/00, C08L 55/02

(54) **Pfropfkautschuke mit verbesserter Beständigkeit gegen thermooxidativen Abbau**
Rubbery graft copolymers having improved resistance against thermooxidative degradation
Elastoméres greffés ayant de résistance améliorée contre la dégradation thérmooxidative

(30) Priorität: 20.12.2005 DE 102005060827
(43) Veröffentlichungstag der Anmeldung: 27.06.2007
(73) Patentinhaber: Ineos ABS (Jersey) Limited, Whiteley Chambers Don Street St Helier Jersey JE4 9WG Channel Islands (GB)
(72) Erfinder: Eichenauer, Herbert, Dr., 41539 Dormagen (DE); Jansen, Ulrich, Dr., 41541 Dormagen (DE)
(74) Vertreter: Roos, Peter

(56) Entgegenhaltungen:
- EP-A1- 0 184 788
- WO-A1-03/078523
- US-A- 3 118 854
- DATABASE WPI Section Ch, Week 200478, Derwent Publications Ltd., London, GB; AN 2004-788648, XP002426586 FUJIWARA, TOYOTAKA, YAMAMOTO: 'Resin composition used for lamp-housing molded product of vehicle lamp, is obtained by blending preset amount of para-cresol dicyclopentadiene butyl compound with thermoplastic resin' & JP 2004 300324 A ((NIAL-N) NIPPON A & L KK) 28 Oktober 2004

## Beschreibung

Die Erfindung betrifft stabilisierte Pfropfkautschuke, ihre Herstellung und Verwendung.

Pfropfkautschuke, d.h. durch Pfropfpolymerisation von Vinylmonomeren in Gegenwart von Kautschuk hergestellte Produkte, finden in zahlreichen Thermoplastsystemen Verwendung als Mittel zur Verbesserung der Schlagzähigkeit.

Als besonders breit anwendbar in verschiedenartigen Thermoplastharzen haben sich solche Pfropfkautschuke erwiesen, die durch Polymerisation von Styrol und Acrylnitril, gegebenenfalls in Kombination mit weiteren Vinylmonomeren wie z.B. α-Methylstyrol oder Methylmethacrylat, in Gegenwart von Butadienkautschuken durch Emulsionspolymerisation erhalten werden.

Beispiele für die Herstellung solcher Pfropfkautschuke und deren Verwendung für die Schlagzähmodifizierung sind in EP-A 253 236 und EP-A 818 480 (ABS-Polymerisate), EP-A 402 748 (PVC), EP-A 315 868 (polycarbonat). DE-A 102 55 824 (Polycarbonat/ABS-Blend-Systeme) beschrieben.

Bei der Überführung der durch Emulsionspolymerisation hergestellten Pfropfkautschuke von der Latexform in die Feststoff-Form hat sich neben der Trocknung zu Pfropfkautschukpulver z.B. mittels Fließbettrockner, Wirbelschichttrokner oder Stromtrockner auch die Entfernung des Wassers unter Verwendung von Knetreaktoren unter direkter Bildung von Pfropfkautschuk/Harzpolymer-Mischungen (vgl. EP-A 768 157, EP-A 867 463 und dort zitierte Literatur) bewährt.

Allerdings tritt hier die Problematik auf, dass das Ausmaß der Empfindlichkeit gegenüber thermooxidativem Abbau für Pfropfkautschukpulver und durch Knetreaktor-Aufarbeitung hergestelltes Pfropfkautschuk enthaltendes Material unterschiedlich sein kann (insbesondere bei Pfropfkautschuken mit Kautschukgehalten über 50 Gew.-%). Dies zeigt sich beispielsweise an einer unterschiedlichen Verfärbungsneigung bei thermischer Belastung der auf unterschiedlichen Aggregaten getrockneten Pfropfkautschuke, wodurch die Flexibilität bei abwechselnder bzw. alternativer Verwendung der verschiedene zur Trocknung des feuchten Pfropfkautschuks eingesetzten Aggregate sehr stark eingeschränkt wird. Zwar werden in der Literatur Stabilisatoren bzw. Stabilisatorsysteme für ABS-Polymerisate und auch ABS-Pfropfkautschuke beschrieben, keines dieser Systeme führt jedoch zu einer Lösung des genannten Problems.

So beschreibt z.B. EP 915 130 A1 die Stabilisierung von ABS-Polymerisaten durch eine Kombination aus einem sterisch gehinderten Phenol. Thioester und Phosphit. Dieses System ist jedoch nur für die Stabilisierung von trockenen Granulaten geeignet, in Gegenwart von Wasser erfolgt Hydrolyse des Phosphits. Eine Einarbeitung in eine wässrige Emulsion ist daher nicht möglich.

Auch die WO 01/92391 A1 beschreibt die Stabilisierung von thermoplastischen ABS-Formmassen unter Verwendung einer Kombination aus einem speziellen sterisch gehinderten Phenol, Thioester, speziellen Dreiblockcopolymeren und Alkali- bzw. Erdalkalimetallsalzen von Carbonsäuren. Eine Einarbeitung dieser komplexen Mischung in eine wässrige Emulsion ist schwierig und führt nicht zur Lösung des Problems, da so z.B. keine Pfropfkautschuke für Anwendungen in gegen alkalische Verbindungen empfindlichen Materialien (z.B. Polycarbonat, Polycarbonat/ABS - Blends) hergestellt werden können.

Die WO 03/078523 beschreibt u.a. Pfropfkautschukmateriallen mit verbesserter Thermostabilität beim Trocknungsvorgang, die unter Verwendung von mindestens einem Antioxidans mit mindestens einer sterisch gehinderten Phenolgruppe, mindestens einer wasserlöslichen anorganischen Phosphorverbindung ausgewählt aus Salzen der hypophosphorigen Säure und der phosphorigen Säure und gegebenenfalls einer nicht in Wasser löslichen phosphorhaltigen stabilisierend wirkenden Verbindung und gegebenenfalls einer schwefelhaltigen stabilisierend wirkenden Verbindung erhalten werden.

In der JP 2004-300324 werden kautschukmodifizierte Styrolharze beschrieben, die eine Parakresol-dicyclopentadienbutyl-Verbindung als phenolischen Stabilisator enthalten. Dabei beschreibt JP 2004-300324 die Verwendung von Zusammensetzungen aus Pfropfkautschuk und Styrol-Acrylnitril-Copolymerisaten, wobei den Copolymerisaten schwefelhaltige Mercaptanverbindungen In Mengen von 0,1 Ges.-% zugesetzt werden.

Aufgabe der vorliegenden Erfindung war es, Pfropfkautschuke zur Verfügung zu stellen, die unabhängig vom angewandten Trocknungsverfahren eine hohe Beständigkeit gegenüber thermooxidativem Abbau aufweisen.

Die Erfindung betrifft gegen thermooxidativen Abbau insbesondere während der Trocknung durch Fliesßbettrockner, Wirbelschichttrockner, Stromtrockner oder Knetreaktoren stabilisierte Pfropfkautschuke, dadurch gekennzeichnet, dass sie
a) mindestens eine phenolische Verbindung A) mit mindestens einer Struktureinheit der allgemeinen Formel I 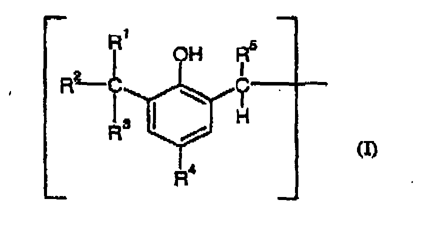 mit
   - R¹, R², R³, R⁴ =: gleich oder verschieden gegebenenfalls substituierte Kohlenwasserstoffrest mit 1 bis 20 Kohlenstoffatomen,
   - R³ =: gegebenenfalls substituierter Kohlenwasserstoffrest mit 1 bis 20 Kohlenstoffatomen oder zusammen mit dem Rest der Verbindung A einen gegebenenfalls substituierten carbocyclische Rest
   und
b) mindestens einen schwefelhaltigem Synergisten B erhältlich durch Polymerisation von gegebenenfalls substituiertem Styrol mit gegebenenfalls substituiertem Acrylnitril und einem Mercaptan HSR⁶; vorzugsweise einer Verbindung B) mit mindestens einer Struktureinheit der allgemeinen Formel II 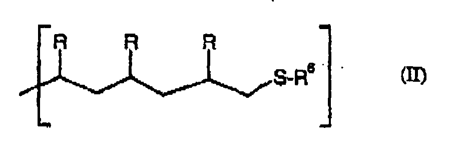 mit
   - R =: gleich oder verschieden C₆H₃, -CN oder substituierter Arylrest
   - R⁶ =: gleich oder verschieden gegebenenfalls substituierter Kohlenwasserstoffrest mit 1 bis 20 Kohlenstoffatomen, wobei der Synergist B einen Schwefelgehalt von 1 bis 4 Gew.-% aufweist,
enthalten.

In einer bevorzugten Ausführungform enthalten die erfindungsgemäßen Pfropfkautschuke noch eine geringe Menge einer phenolischen Verbindung A1) mit mindestens einer Struktureinheit der allgemeinen Formel (III) 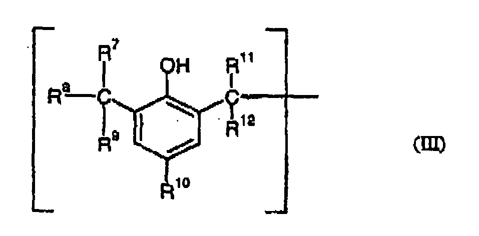 mit
- R⁷, R⁸, R⁹, R¹¹, R¹²=: gleich oder verschieden gegebenenfalls substituierter Kohlenwasserstoffrest mit 1 bis 20 Kohlenstoffatomen,
- R¹⁰ =: organischer Rest, vorzugsweise Kohenwasserstoffrest mit 1 bis 10 Kohlenstoffatomen.

Eine geringe Menge bedeutet im Sinne der Erfindung, dass die Menge an A1) im Allgemeinen 5 bis 30 Gew.-%, vorzugsweise 10 bis 25 Gew.-% (Jeweils bezogen auf Gew.-Menge A), beträgt.

Ein weiterer Gegenstand der vorliegenden Erfindung sind solche Pfropfkautschuke enthaltende thermoplastische Formmassen.

Ein weiterer Gegenstand der vorliegenden Erfindung ist außerdem ein Verfahren zur Herstellung gegen thermooxidativen Abbau stabilisierter getrockneter Pfropfkautschuke, dadurch gekennzeichnet, dass dem in Emulsionsform vorliegenden Pfropfkautschuk vor der Aufarbeitung und Trocknung unter Rühren eine in wässriger Emulsions- oder Dispersionsform vorliegende Verbindung A) und ein schwefelhaltiger Synergist B erhältlich durch Polymerisation von gegebenenfalls substituiertem Styrol mit gegebenenfalls substituierem Acrylnitril und einem Mercaptan HSR⁶, wobei R⁶ die oben angegebene Bedeutung hat, und der einen Schwefelgehalt von 1 bis 4 Gew.-; aufweist, vorzugsweise eine als wässriger Emulsion vorliegende Verbindung B) zugesetzt werden.

Dabei werden vorzugsweise die beiden Komponenten A) und B) unabhängig voneinander zu der Emulsion des zu stabilisierenden Pfropfkautschuks zugesetzt und eingerührt, vorzugsweise wird zunächst die Emulsion oder Dispersion der Verbindung A) zugesetzt und eingerührt und danach die Emulsion der Verbindung B) zugegeben und eingerührt.

Die Einsatzmengen an A) betragen in der Regel 0,1 bis 1 Gew.-Teile, vorzugsweise 0,2 bis 0,8 Gew.-Teile und besonders bevorzugt 0,25 bis 0,7 Gew.-Teile (jeweils bezogen auf 100 Gew.-Teile Pfropfkautschuk).

Die Einsatzmengen an B) betragen in der Regel 0,5 bis 5 Gew.-Teile, vorzugsweise 1 bis 4 Gew.-Teile und besonders bevorzugt 1,5 bis 3,5 Gew.-Teile (jeweils bezogen auf 100 Gew.-Teile Pfropfkautschuk).

Erfindungsgemäß einzusetzende Pfropfkautschuke sind Produkte, die durch Emulsionspolymerisation von Gemischen aus Styrol und Acrylnitril sowie gegebenenfalls weiterer Monomerer in Gegenwart von in Emulsionsform vorliegenden Kautschuken erhalten wurden.

Geeignete Kautschuke sind in Emulsionsform vorliegende Kautschuke mit Glasübergangstemperaturen ≤ 10°C. Bevorzugte Kautschuke sind Polymerisate des Butadiens, beispielsweise Polybutadien, Butadien/Styrol-Copolymerisate, vorzugsweise mit Styrolgehalten von 3 bis 40 Gew.-%, Butadien/Acrylnitril-Copolymerisate, vorzugsweise mit Acrylnitrilgehalten von 3 bis 20 Gew.-%, Terpolymerisate aus Butadien, Styrol und Acrylnitril, Co- und Terpolymerisate von Butadien mit anderen Vinylmonomeren wie beispielsweise Acrylsäure, Methacrylsäure, Vinylpyridin, C₁₋₈-Acrylsäureestern wie beispielsweise n-Butylacrylat oder 2-Ethylhexylacrylat, C₁₋₈-Methacrylsäureestern wie z.B. Methylmethacrylat.

Bevorzugte Kautschuke sind Polybutadien, Butadien/Styrol-Copolymerisate, Butadien/Acrylnitril-Copolymerisate.

Für die Herstellung der erfindungsgemäß einzusetzenden Pfropfkautschuke liegt der Kautschuk zweckmäßigerweise in Emulsionsform vor. Die zur Herstellung der Pfropfkautschuke verwendeten Kautschuklatices besitzen in der Regel mittlere Teilchendurchmesser von 50 bis 1000 nm, vorzugsweise 80 bis 800 nm und besonders bevorzugt 100 bis 600 nm. Dabei können monomodale, bimodale, trimodale und multimodale Kautschuklatices verwendet werden.

Die mittleren Teilchendurchmesser werden mittels Ultrazentrifuge (vgl. W. Scholtan, H. Lange : Kolloid Z. u. Z. Polymere 250, S. 782 bis 796 (1972)) bestimmt.

Die Gelgehalte der Kautschuke betragen im Allgemeinen mindestens 30 Gew.-%, vorzugsweise mindestens 40 Gew.-% (gemessen in Toluol nach der Drahtkäfigmethode, vgl. Houben-Weyl, Methoden der Organischen Chemie, Makromolekulare Stoffe, Teil 1, S. 307 (1961), Thieme Verlag Stuttgart).

Geeignete Vinylmonomere zum Aufbau der Pfropfhülle der erfindungsgemäß einzusetzenden Pfropfkautschuke sind prinzipiell Monomere, die sich in wäßriger Emulsion in Gegenwart eines Kautschuklatex polymerisieren lassen. Vorzugsweise eingesetzt werden Vinylaromaten wie beispielsweise Styrol oder α-Methylstyrol in Kombination mit ungesättigten Nitrilen wie beispielsweise Acrylnitril oder Methacrylnitril. Weitere Monomere wie z.B. C₁₋₈-Acrylsäureester und C₁₋₈-Methacrylsäureester, z.B. n-Butylacrylat, tert.-Butylacrylat oder Methylmethacrylat, oder N-substituierte Maleinimide, z.B. N-Phenylmaleinimid, können in Anteilen zusätzlich zum Vinylaromat und ungesättigten Nitril eingesetzt werden.

Besonders bevorzugte Vinylmonomere sind Mischungen aus Styrol und Acrylnitril, vorzugsweise im Gew.-Verhältnis 90 : 10 bis 50 : 50, besonders bevorzugt im Gew.-Verhältnis 65 : 35 bis 80 : 20.

Die Herstellung der erfindungsgemäß einzusetzenden Pfropfkautschuke kann so durchgeführt werden, daß das Monomerengemisch kontinuierlich zum jeweiligen Kautschuklatex gegeben und polymerisiert wird. Zusätzlich zu den Monomeren können bei der Pfropfpolymerisation Molekulargewichtsregler eingesetzt werden, vorzugsweise in Mengen von 0,05 bis 2 Gew.-%. Geeignete Molekulargewichtsregler sind beispielsweise Alkylmercaptane wie n-Dodecylmercaptan, t-Dodecylmercaptan, dimeres α-Methylstyrol, Terpinolen.

Als Initiatoren kommen anorganische und organische Peroxide, z.B. H₂O₂, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium-, oder Kaliumpersulfat, Kaliumperphosphat, Natriumperborat sowie Redox-Systeme in Betracht, die sich aus einem in der Regel organischen Oxidationsmittel und einem Reduktionsmittel zusammensetzen, wobei im Reaktionsmedium zusätzlich Schwermetallionen vorhanden sein können (siehe Houben- Weyl, Methoden der Organischen Chemie, Band 14/1, S. 263 bis 297).

Die Polymerisationstemperatur ist 25°C bis 160°C, vorzugsweise 40°C bis 90°C. Geeignete Emulgatoren sind die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren. Vorzugsweise werden Emulgatoren mit Carboxylgruppen (z.B. Salze von C₁₀-C₁₈-Fettsäuren, disproportionierte Abietinsäure, Emulgatoren gemäß DE-A 36 39 904 und DE-A 39 13 509) eingesetzt.

Die erfindungsgemäß einzusetzenden Pfropfkautschuke besitzen einen Kautschukgehalt von 10 bis 90 Gew.-%, bevorzugt von 30 bis 80 Gew.-% und besonders bevorzugt von 50 bis 75 Gew.-%.

Die erfindungsgemäß einzusetzenden speziell aufgebauten phenolischen Verbindungen A) besitzen ein Molekulargewicht über 400, vorzugsweise 600 bis 1000. Derartige Verbindungen sind im Prinzip bekannt. Beispiele sind z.B. die unter den Bezeichnungen Wingstay® L (Eliokem), Lowinox® CPL (Great Lakes), Ralox® LC (Degussa), Anox® 29 (Great Lakes) im Markt befindlichen Phenole.

Besonders bevorzugt eingesetzt wird die Verbindung 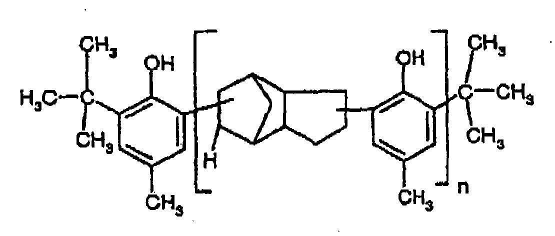 n = 1 -10.

Die gegebenenfalls in einer geringen Menge erfindungsgemäß zusätzlich einzusetzenden Verbindungen A1) besitzen ein Molekulargewicht über 400, vorzugsweise 500 bis 1200. Derartige Verbindungen sind im Prinzip bekannt.

Beispiele sind Irganox® 1076 (Ciba), Anox® PP 18 (Great Lakes), Irganox® 1010 (Ciba), Anox® PP 20 (Great Lakes), Irganox® 259 (Ciba).

Die Überführung der Verbindung A) und gegebenenfalls der Verbindung A1) in eine wässrige Emulsions- oder Dispersionsform kann z.B. unter Erzeugung starker Scherkräfte in Strahldispergatoren oder unter Verwendung von Ultraturrax®-Geräten in Gegenwart wässriger Tensidlösungen erfolgen.

Als wässrige Tenside kommen beispielsweise Lösungen anionischer oder nichtionischer Emulgatoren in Frage. Beispiele für solche Verbindungen sind Alkalisalze von Fettsäuren, Alkalisalze von Harzsäuren, Alkalisalze der Sulfobernsteinsäure, Alkalisalze von Alkylsulfonsäuren oder Aralkylsulfonsäuren, ethoxylierte Fettalkohole, ethoxylierte Alkylphenole.

Die erfindungsgemäß einzusetzende schwefelhaltige Verbindung B) wird vorzugsweise durch Emulsionspolymerisation von Vinylmonomeren, vorzugsweise von Gemischen aus Styrol und Acrylnitril im Gew.-Verhältnis 90 : 10 bis 60 : 40, vorzugsweise 80 : 20 bis 70 : 30, in Gegenwart von Mercaptanen erhalten.

Die erfindungsgemäß einzusetzenden Verbindungen B) haben einen Schwefelgehalt von 1 bis 4 Gew.-%, vorzugsweise von 1 bis 3 Gew.-%.

Die Herstellung derartiger Verbindungen ist prinzipiell bekannt und beispielsweise in der EP-PS 195 918 beschrieben. Da durch die Herstellung von B) mittels Emulsionspolymerisation direkt eine wässrige Emulsion anfällt, kann die Verbindung B) ohne weitere Behandlung in dieser Form eingesetzt werden.

Die Zugabe der Komponenten A), gegebenenfalls A1) und B) zu den Pfropfkautschukemulsionen erfolgt üblicherweise vor der Aufarbeitung, wobei auf ein homogenes Verteilen zu achten ist. Vorzugsweise wird zunächst A) (und gegebenenfalls A1)) zugesetzt, homogen im Pfropfkautschuklatex verteilt und danach B) zugegeben und homogen verteilt.

Prinzipiell ist es auch möglich A) und gegebenenfalls A1) und B) vor der Zugabe zu mischen oder A) und gegebenenfalls A1) und B) zeitgleich zuzugeben und homogen zu verteilen.

Die Aufarbeitung des mit A) und gegebenenfalls A1) und B) vermischten Pfropfkautschuklatex erfolgt vorzugsweise durch Koagulation nach Zusatz von Elektrolyten. Bevorzugt ist hierbei die Verwendung von Salzlösungen (z.B. wässrige Lösungen von Magnesiumsulfat, Natriumsulfat, Aluminiumsulfat, Natriumchlorid, Calciumchlorid), Säuren (z.B. Essigsäure, Schwefelsäure, Phosphorsäure) oder Kombinationen daraus.

Das nach der Koagulation vorliegende Gemisch aus Wasser und darin aufgeschlämmtem Pfropfkautschuk wird üblicherweise durch Filtration, Abpressen oder Zentrifugation getrennt, wonach der feuchte Pfropfkautschuk durch Behandlung in Trocknern (z.B. Fließbettrockner, Wirbelschichttrockner, Stromtrockner, Knetreaktoren) vom noch enthaltenen Wasser befreit wird. Bei der Trocknung in Knetreaktoren erfolgt üblicherweise eine gleichzeitige Vermischung mit Harzpolymeren (vgl. hierzu EP-A 768 157 und EP-A 867 463). Bei der Trocknung der erfindungsgemäßen Pfropfkautschuke in Knetreaktoren erfolgt vorzugsweise eine Vermischung mit Styrol/Acrylnitril-Copolymerisaten, besonders bevorzugt mit Styrol/Acrylnitril-Copolymerisaten aufgebaut aus 50 bis 95 Gew.-% Styrol und 5 bis 50 Gew.-% Acrylnitril, vorzugsweise aus 65 bis 85 Gew.-% Styrol und 15 bis 35 Gew.-% Acrylnitril.

Diese Copolymerisate besitzen vorzugsweise mittlere Molekulargewichte M̅_̅{̅w̅}̅ von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Harzpolymere haben sich besonders bewährt. Die Copolymerisate können allein oder in beliebiger Mischung zugesetzt werden.

Die resultierenden wasserfreien Pfropfkautschukprodukte eignen sich zur SchlagzähModifizierung von Polymeren und können zu diesem Zweck mit weiteren Polymerkomponenten, vorzugsweise ausgewählt aus Styrol/Acrylnitril-Copolymerisaten, α-Methylstyrol/Acrylnitril-Copolymerisaten, aromatischen Polycarbonaten, aromatischen Polyestercarbonaten, Polyester, Polyamid, PVC abgemischt werden.

### Beispiele

In den nachfolgenden Beispielen wird die Erfindung näher erläutert. Die angegebenen Teile sind Gewichtsteile und beziehen sich immer auf Festbestandteile bzw. polymerisierbare Bestandteile.

Bei der Durchführung der nachstehend beschriebenen Versuche wurden folgende Substanzen eingesetzt :

### Pfropfkautschuklatex 1

Als Pfropfkautschuk 1 wurde ein durch Emulsionspolymerisation von 40 Gew.-Teilen eines Styrol/Acrylnitril-Gemisches (Gew.-Verhältnis 73:27) in Gegenwart von 60 Gew.-Teilen eines Polybutadienlatex mit einer mittleren Teilchengröße d₅₀ von 345 nm (unter Verwendung eines Redox-Initiatorsystem aus Natriumascorbat und tert.-Butylhydroperoxid) erhaltenes Polymerisat eingesetzt.

### Pfropfkautschuklatex 2

Als Pfropfkautschuk 2 wurde ein Gemisch aus einem ersten Pfropfkautschuklatex (erhalten durch Emulsionspolymerisation von 50 Gew.-Teilen eines Styrol/Acrylnitril-Gemisches im Gew.-Verhältnis 73:27 in Gegenwart von 50 Gew.-Teilen eines Polybutadienlatex mit einer mittleren Teilchengröße d₅₀ von 125 nm (unter Verwendung von Kaliumperoxodisulfat als Initiator)) und einem zweiten Pfropfkautschuklatex (erhalten durch Emulsionspolymerisation von 41 Gew.-Teilen eines Styrol/Acrylnitril-Gemisches im Gew.-Verhältnis 73:27 in Gegenwart von 59 Gew.-Teilen eines Polybutadienlatex mit einer mittleren Teilchengröße d₅₀ von 345 nm (unter Verwendung von Kaliumperoxodisulfat als Initiator)) eingesetzt, wobei das Gewichtsverhältnis der beiden Pfropfkautschuke 1:1 betrug.

### Styrol/Acrylnitril-Copolymerisat (SAN-Harz)

Durch radikalische Lösungspolymerisation erhaltenes statistisches Copolymerisat (Gew.-Verhältnis Styrol : Acrylnitril = 72 : 28) mit einem mittleren Molekulargewicht M̅_{w} von ca. 85 000 und einer molekularen Uneinheitlichkeit M̅_{w} /M̅ₙ -1≤2.

Die folgenden Stabilisatoren wurden den Pfropfkautschuken wie in Tabelle 1 angegeben zugesetzt, wobei der Gehalt an durch die zugesetzten Stabilisatoren zugefügten Wirkgruppen jeweils konstant gehalten wurde (sterisch gehinderte OH-Gruppe 0,024%, Schwefelgehalt 0,047%).
A) 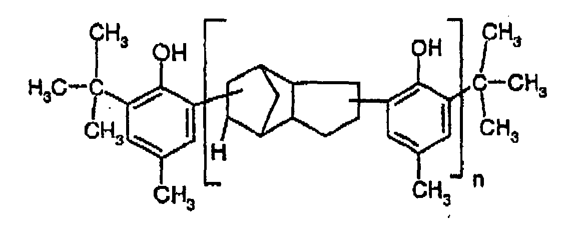 Wingstay® L der Eliochem, Frankreich
B) 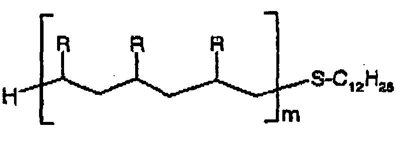 hergestellt durch Emulsionspolymerisation von Styrol, Acrylnitril und tert.-Dodecylmercaptan gemäß EP-B 195 918, Beispiel 1.
C) Octadecyl-3-(3,5-di-tert.-butyl-4-hydroxyphenyl)-propionat (Irganox® 1076, Ciba, Basel, Schweiz).
D) Dilaurylthiodipropionat (Irganox® PS 800, Ciba, Basel, Schweiz).
   (nicht erfindungsgemäßer Synergist)

Die Einarbeitung der Stabilisatoren erfolgte durch Zugabe der in Form separater wässriger Dispersionen bzw. wässriger Emulsionen vorliegenden Substanzen zu den Pfropfkautschuklatices.

Dabei werden die jeweiligen Dispersionen bzw. Emulsionen einzeln (zunächst A und danach B) zum Pfropfkautschuklatex gegeben und jeweils durch Rühren homogen verteilt.

Die Aufarbeitung erfolgte jeweils durch Ausfällung mit einem 1 : 1 - Gemisch von Magnesiumsulfat und Essigsäure in Form einer 1%igen wässrigen Lösung; das anschließende Waschen wurde mit Wasser durchgeführt. Nach dem Entfernen des überwiegenden Anteils des Wassers durch Filtration, Abpressen und Zentrifugieren wurden die danach vorliegenden feuchten Pulver in Analogie zu Beispiel 1 der EP-B 867 463 in einem Knetreaktor mit der Schmelze des oben beschriebenen Styrol/Acrylnitril-Copolymerisats vermischt und getrocknet (Trocknung K in Tabelle 1).

Parallel dazu wurden die feuchten Pulver der koagulierten Pfropfkautschuke in einem Umlufttrockenschrank bei 70 °C getrocknet (Simulation Pulvertrocknung, Trocknung P in Tabelle 1).

Die Messung der Thermostabilität der in Pulverform vorliegenden Pfropfkautschuke erfolgte durch Ermittlung der oxidativen Verfärbung unter Verwendung eines Metrastat-Testsystems PSD 260 (Hersteller : PSD-Prüfgeräte-Systeme Dr. Stapfer GmbH, Düsseldorf). Dabei wird bei vorgegebener Temperatur das Pfropfkautschukpulver unter Luft gelagert und die Zeit bis zur Verfärbung ermittelt. Dies stellt eine Simulation der thermischen Belastung beim Trocknungsvorgang dar. Die Ermittlung der Stabilität der Pfropfkautschuke erfolgte durch Bestimmung der Zeit, nach der bei 180°C eine Braunverfärbung einsetzte.

Die Bestimmung der Thermostabilität der nach Trocknung im Knetreaktor erhaltenen Produkte erfolgte durch Messung der Farbe im nicht eingefärbten Zustand am resultierenden Produkt (Yellowness-Index, YI, gemäß ASTM-Norm D 1925 (Lichtart : C, Beobachter 2°, Messöffnung : Large Area Value nach der Gleichung YI = (128X-106Z/Y), mit X,Y,Z = Farbkoordinaten gemäß DIN 5033.

Die entsprechenden Werte für die Thermostabilitäten nach Trocknung (Zeit bis zur Braunfärbung beim Metrastat-Test bzw. YI bei Trocknung im Knetreaktor) sind ebenfalls in Tabelle 1 angegeben.

Aus den Werten ist ersichtlich, dass nur die erfindungsgemäß stabilisierten Pfropfkautschuke sowohl bei Trocknung unter Resultieren von Pfropfkautschukpulver als auch bei Trocknung im Knetreaktor unter Resultieren von Pfropfkautschuk/Harzpolymer-Mischung eine gut Stabilität gegenüber thermooxidativem Abbau aufweisen.

**Tabelle 1**

| **Beispiel** | **Pfropfkautschuk 1** | **Pfropf kautschuk 2** | **SAN Harz** | **Stabilisator A** | **Stabilisator B** | **Stabilisator C** | **Stabilisator D** | **Trocknung** | **Metrastattest (Zeit bis zur beginnenden Verbräunug in min)** | **Yl** |
|---|---|---|---|---|---|---|---|---|---|---|
| 1 | 100 | -- | -- | X | X | -- | -- | P | 350 | -- |
| 5 (Vergleich) | 100 | -- | -- | -- | -- | X | X | P | 120 | -- |
| 6 | 75 | -- | 25 | X | X | -- | -- | K | -- | 23 |
| 10 (Vergleich) | 75 | -- | 25 | -- | -- | X | X | K | -- | 32 |
| 11 | -- | 100 | -- | X | X | -- | -- | P | 380 | -- |
| 15 (Vergleich) | -- | 100 | -- | -- | -- | X | X | P | 270 | -- |
| 16 | -- | 75 | 25 | X | X | -- | -- | K | -- | 24 |
| 20 (Vergleich) | -- | 75 | 25 | -- | -- | X | X | K | -- | 31 |

| | | | | | | | | | | |
|---|---|---|---|---|---|---|---|---|---|---|
| In der Spalte "Metrastattest" ist das Produkt um so besser je hüber der Wert ist. In der Spalte YI ist das Produkt um so besser je kleiner der Wert ist. | | | | | | | | | | |

## Patentansprüche

1. Gegen thermooxidativen Abbau stabilisierte Pfropfkautschuke, enthaltend Stabilisatoren, wobei die genannten Stabilisatoren aus folgenden Komponenten bestehen:
a) mindestens einer phenolischen Verbindung A) mit mindestens einer Struktureinheit der allgemeinen Formel I 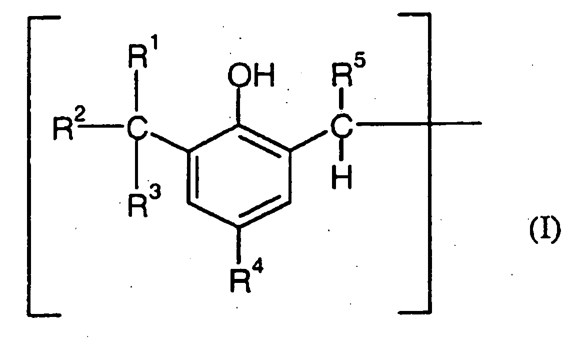 mit
R¹, R², R³, R⁴ = gleich oder verschieden gegebenenfalls substituierter Kohlenwasserstoffrest mit 1 bis 20 Kohlenstoffatomen,
R⁵ = gegebenenfalls substituierter Kohlenwasserstoffrest mit 1 bis 20 Kohlenstoffatomen oder zusammen mit dem Rest der Verbindung A einen gegebenenfalls substituierten carbocyclischen Rest ,
gegebenenfalls 5 bis 30 Gew.-% (bezogen auf die Gew.-Menge A)) einer phenolischen Verbindung A1) mit mindestens einer Struktureinheit der allgemeinen Formel III 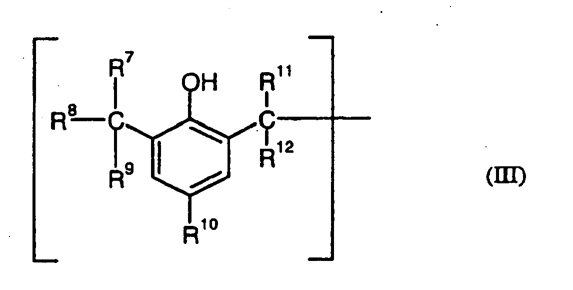 mit
R⁷, R⁸, R⁹, R¹¹, R¹² = gleich oder verschieden gegebenenfalls substituierter Kohlenwasserstoffrest mit 1 bis 20 Kohlenstoffatomen,
R¹⁰ = organischer Rest, vorzugsweise Kohlenwasserstoffrest mit 1 bis 10 Kohlenstoffatomen, und
b) mindestens einem schwefelhaltigen Synergisten B erhältlich durch Polymerisation von gegebenenfalls substituiertem Styrol mit gegebenenfalls substituiertem Acrylnitril und einem Mercaptan HSR⁶; vorzugsweise einer Verbindung B) mit mindestens einer Struktureinheit der allgemeinen Formel II 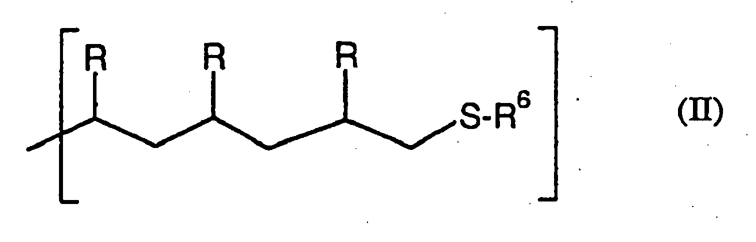 mit
R = gleich oder verschieden C₆H₅, -CN oder substituierter Arylrest
R⁶ = gleich oder verschieden gegebenenfalls substituierter Kohlenwasserstoffrest mit 1 bis 20 Kohlenstoffatomen,
wobei der Synergist B einen Schwefelgehalt von 1 bis 4 Gew.-% aufweist.

2. Pfropfkautschuke gemäss Anspruch 1 , **dadurch gekennzeichnet, dass** als phenolische Verbindung A) 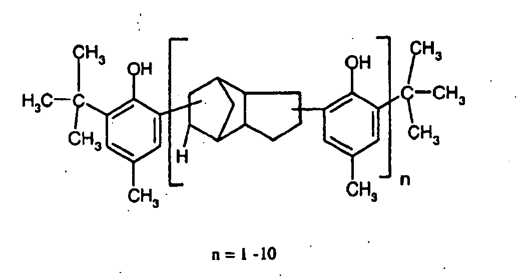 enthalten ist.

3. Pfropfkautschuke gemäss Anspruch 1 , **dadurch gekennzeichnet, dass** als Verbindung B ein durch Emulsionspolymerisation erhaltenes Produkt aus Styrol, Acrylnitril und tert.-Dodecylmercaptan mit einem Schwefelgehalt von 1 bis 3 Gew.-% enthalten ist.

4. Pfropfkautschuke gemäss Anspruch 1 , **dadurch gekennzeichnet, dass** als Verbindung A1) 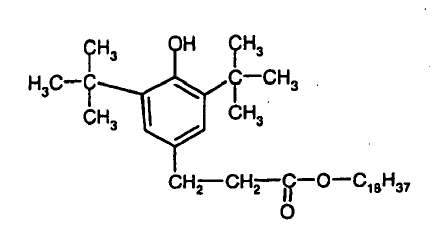 enthalten ist.

5. Verfahren zur Herstellung gegen thermooxidativen Abbau stabilisierter getrockneter Pfropfkautschuke, **dadurch gekennzeichnet, dass** dem in Emulsionsform vorliegenden Pfropfkautschuk vor der Aufarbeitung und Trocknung durch Fliessbettrockner, Wirbelschichttrockner, Stromtrockner oder Knetreaktoren unter Rühren eine in wässriger Emulsions- oder Dispersionsform vorliegende phenolische Verbindung A) gemäss Anspruch 1 und ein in wässriger Emulsion vorliegender Synergist B) gemäss Anspruch 1 zugesetzt werden.

6. Verwendung der stabilisierten Pfropfkautschuke gemäss Ansprüchen 1 bis 4 zur Herstellung schlagzäh modifizierter thermoplastischer Formmassen.

## Claims

1. Graft rubber stabilised against thermo-oxidative decomposition, containing stabilisers, whereby said stabilisers consist of the following components:
a) at least one phenolic compound A) with at least one structure unit of the general formula I 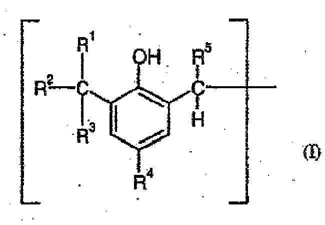 mit
where
R¹, R², R³, R⁴ =the same or different hydrocarbon residue substance, substituted as appropriate, with 1 to 20 carbon atoms,
R⁵ = hydrocarbon residue substance, substituted as appropriate, with 1 to 20 carbon atoms or, together with the residue of the compound A, a carbocyclic residue substituted as appropriate;
as appropriate, 5 to 30 % by weight (related to the proportion by weight of A) of a phenolic compound A1) with at least one structure unit of the general formula III 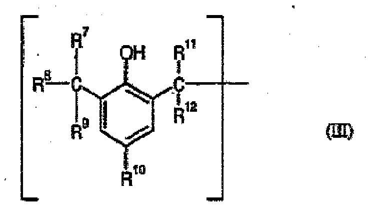 where
R⁷, R⁸, R⁹, R¹¹, R¹² =the same or different hydrocarbon residue substance, substituted as appropriate, with 1 to 20 carbon atoms,
R¹⁰ = organic residue substance, for preference hydrocarbon residue with 1 to 10 carbon atoms, and
b) at least one synergist B containing sulphur, obtained by polymerisation of styrene, substituted as appropriate, with acrylonitrile substituted as appropriate and a mercaptan HSR⁶, for preference a compound B) with at least one structure unit of the general formula II 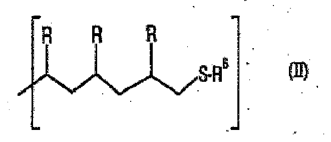 where
R = the same or different C₆H₅, -CN or substituted aryl residue
R⁶ = the same or different hydrocarbon residue, substituted as appropriate, with 1 to 20 carbon atoms,
whereby the synergist B exhibits a sulphur content of 1 to 4 % by weight.

2. Graft rubber according to Claim 1, **characterised in that**, as the phenolic compound A), the following is container:

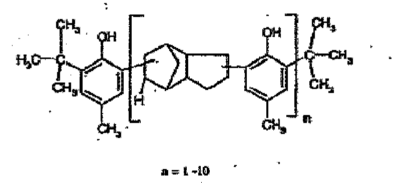

3. Graft rubber according to Claim 1, **characterised in that**, as the compound B, a product is contained which is obtained by emulsion polymerisation made of styrene, acrylonitrile, and tert. dodecyl mercaptan with a sulphur content of 1 to 3 % by weight.

4. Graft rubber according to Claim 1, **characterised in that**, as the compound A1), 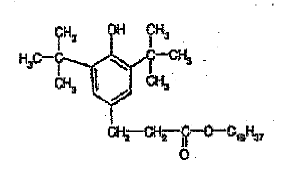 is obtained.

5. Method for the manufacture of dried graft rubbers stabilised against thermo-oxidative decomposition, **characterised in that**, before processing and drying by fluidised bed dryers, flow dryers, or mixing reactors, and under stirring, a phenolic compound A) according to Claim 1, present in aqueous emulsion or dispersion form, and a synergist B) according to Claim 1, present h aqueous emulsion, are added to the graft rubber present In emulsion form.

6. Use of the stabilised graft rubbers according to Claims 1 to 4 for the manufacture of impact resistant modified thermoplastic moulding compounds.

## Revendications

1. Caoutchoucs greffés stabilisés contre la dégradation thermo-oxydative, contenant des stabilisateurs, lesdits stabilisateurs étant constitués des composants suivants :
a) au moins un composé phénolique A) comprenant au moins un motif structurel de la formule générale I 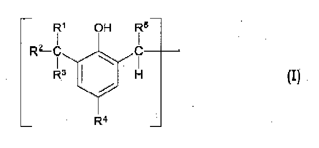 dans laquelle
R¹, R², R³, R⁴ sont identiques ou différents et représentent un reste hydrocarbure facultativement substitué de 1 à 20 atomes de carbone ;
R⁵ est un reste hydrocarbure facultativement substitué de 1 à 20 atomes de carbone ou forme ensemble avec le reste du composé A) un reste carbocyclique facultativement substitué ;
facultativement, de 5 à 30% en poids (ramené à la quantité en poids de A)) d'un composé phénolique A1) comprenant au moins un motif structurel de la formule générale III 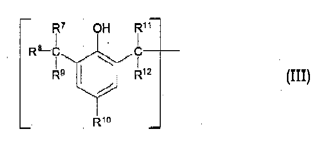 dans laquelle
R⁷, R⁸, R⁹, R¹¹, R¹² sont identiques ou différents et représentent un reste hydrocarbure facultativement substitué de 1 à 20 atomes de carbone ;
R¹⁰ est un reste organique, de préférence un reste hydrocarbure de 1 à 10 atomes de carbone ; et
b) au moins un synergiste B) contenant du soufre, qui peut être obtenu par polymérisation de styrène, facultativement substitué, avec de l'acrylonitrile facultativement substitué et un mercaptan HSR⁶ ; de préférence d'un composé B) comprenant au moins un motif structurel de la formule générale II 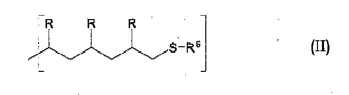 dans laquelle
les R sont identiques ou différents et représentent C₆H₅, -CN ou un reste aryle substitué ;
les R⁶ sont identiques ou différents et représentent un reste hydrocarbure facultativement substitué de 1 à 20 atomes de carbone ;
le synergiste B présentant une teneur en soufre de 1 à 4% en poids.

2. Caoutchoucs greffés selon la revendication 1, **caractérisés en ce que** le composé phénolique A) qu'ils contiennent est

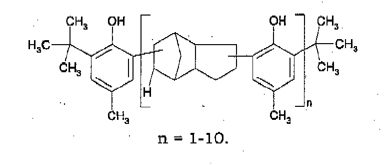

3. Caoutchoucs greffés selon la revendication 1, **caractérisés en ce que** le composé B) qu'ils contiennent est un produit obtenu par polymérisation en émulsion de styrène, d'acrylonitrile et de tert.-dodécylmercaptan ayant une teneur en soufre dans la plage de 1 à 3% en poids.

4. Caoutchoucs greffés selon la revendication 1, **caractérisés en ce que** le composé A1) qu'ils contiennent est

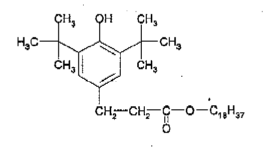

5. Procédé de production de caoutchoucs greffés séchés stabilisés contre la dégradation thermo-oxydative, **caractérisé en ce que** l'on ajoute au caoutchouc greffé présent sous forme d'émulsion, avant le traitement et le séchage dans un sécheur en lit à écoulement, un sécheur en lit fluidisé, un sécheur à courant d'air ou des réacteurs de malaxage sous agitation un composé phénolique A) selon la revendication 1 présent sous la forme d'une émulsion ou dispersion aqueuse et un synergiste B) selon la revendication 1 présent sous la forme d'une émulsion aqueuse.

6. Utilisation des caoutchoucs greffés stabilisés selon les revendications 1 à 4 pour fabriquer des matières moulables thermoplastiques modifiées pour être résistantes aux chocs.
